# EUROPÄISCHE PATENTANMELDUNG

(11) **EP 4 524 200 A1**
(43) Veröffentlichungstag der Anmeldung: **19.03.2025**
(21) Anmeldenummer: 23197430.4
(22) Anmeldetag: 14.09.2023
(51) Int. Cl.: C08L 69/00, C08L 33/12

(54) **TRANSPARENTE POLYCARBONAT/POLYACRYLAT-BLENDS**

(71) Anmelder: Covestro Deutschland AG, 51373 Leverkusen (DE)
(72) Erfinder: WEHRMANN, Rolf, 51373 Leverkusen (DE); HEUER, Helmut Werner, 51373 Leverkusen (DE); BOUMANS, Anke, 51373 Leverkusen (DE)
(74) Vertreter: Levpat

(57) **Zusammenfassung**

Beschrieben ist die verbesserte Verträglichkeit von Polycarbonat und Polyalkyl(meth)acrylat, als Blendpartner, was durch Zusatz von (Meth)acrylat-Copolymer, enthaltend aromatische (Meth)acrylat-Einheiten und Methylmethacrylat-Einheiten, erreicht wird. Es lassen sich hierdurch Polcarbonat/ Polyalkyl(meth)acrylat-Blends erhalten, die eine gute Transmission und eine deutlich geringere Trübung aufweisen.

## Beschreibung

Die vorliegende Erfindung betrifft thermoplastische Zusammensetzungen, enthaltend ein Polycarbonat und Polyalkyl(meth)acrylat.

Thermoplastische Zusammensetzungen sind für eine Vielzahl von Anwendungen geeignet und eine beliebte Materialalternative, da sie gut verarbeitbar sind und vergleichsweise einfach in die unterschiedlichsten Formteile überführt werden können.

Polycarbonat ist dabei ein besonders interessantes Material, da es eine hohe Wärmeformbeständigkeit und eine hohe Zähigkeit bei Raumtemperatur aufweist. Es lässt sich in unterschiedlichsten Materialerscheinungsformen bereitstellen. Je nach Rezepturbestandteilen sind unterschiedlichste Materialien mit breiten Eigenschaftsprofilen hinsichtlich der thermischen, rheologischen und mechanischen Eigenschaften erreichbar. Die Einsatzmöglichkeiten von Polycarbonat sind entsprechend vielfältig, beispielsweise im Automobilbereich, für Schienenfahrzeuge, für den Bausektor, im Bereich Elektro/Elektronik/IT, Batteriegehäuse, für Haushaltsgeräte, im Beleuchtungssektor für Innen- und Außenanwendungen, für 3D-Printing oder im Bereich der Medizintechnik (Medical-Produkte wie Dialysatoren, Luer-Systeme, Hähne oder Tuben).

Polymethylmethacrylat (PMMA) weist im Vergleich zu den aromatischen Polycarbonaten bessere optische Eigenschaften auf. So ist beispielsweise die optische Transmission aufgrund des rein aliphatischen Charakters höher. Aus demselben Grund ist auch die Witterungsstabilität besser. Bauteile aus PMMA weisen eine höhere Härte und damit eine geringere Kratzempfindlichkeit als Bisphenol A-basierte Polycarbonate (BPA-PC) auf. Nachteilig sind jedoch die niedrigeren Wärmeformbeständigkeiten sowie die geringere Zähigkeit von PMMA im Vergleich zu BPA-PC.

Eine Kombination der jeweiligen Materialeigenschaften von BPA-PC und PMMA wäre aus technischer Sicht daher wünschenswert. Die beiden Polymere sind jedoch nur schwierig mischbar und größtenteils unverträglich, was zu opaken und gegebenenfalls opaleszierenden Bauteilen führt, so dass entsprechend transparente Zusammensetzungen mit beiden Polymeren nicht einfach zugänglich sind. Es bestand daher die Aufgabe, diese Nachteile zumindest teilweise zu verbessern, insbesondere durch eine Reduzierung der Opaleszenz.

Überraschend hat sich gezeigt, dass diese Aufgabe durch Zugabe eines (Meth)acrylat-Copolymers, enthaltend aromatische (Meth)acrylat-Einheiten c1 und Methylmethacrylat-Einheiten c2 zu einer Zusammensetzung, die aromatisches, insbesondere auf Bisphenol A-basierendes Polycarbonat und PMMA enthält, gelöst wird. Es lassen sich so Polycarbonat/Polyalkyl(meth)acrylat-Blends, insbesondere PC/PMMA-Blends, mit höherer Transmission im VIS-Bereich des Spektrums (380 bis 780 nm), bestimmt nach DIN ISO 13468-2:2006 (D65, 10°, Schichtdicke der Musterplatte 4 mm), und einer reduzierten Trübung, bestimmt nach ASTM D1003:2013, beides im Vergleich zu einer entsprechenden Zusammensetzung ohne das (Meth)acrylat-Copolymer, durch einfaches Compoundieren erhalten. "Entsprechende Zusammensetzung" bedeutet hierbei, dass die sonstigen Bestandteile wie Additive in gleichen Mengen enthalten sind, statt des (Meth)acrylat-Copolymers in der Vergleichszusammensetzung jedoch mehr desselben aromatischen Polycarbonats enthalten ist.

Gegenstand der Erfindung ist daher eine thermoplastische Zusammensetzung gemäß Anspruch 1, also eine Zusammensetzung, enthaltend
A) aromatisches Polycarbonat mit einer Schmelzevolumenfließrate MVR > 19 cm³/(10 min), bestimmt gemäß ISO 1133:2012-03 bei einer Prüftemperatur von 300°C und 1,2 kg Belastung,
B) Polyalkyl(meth)acrylat,
   dadurch gekennzeichnet, dass
   die Zusammensetzung
C) (Meth)acrylat-Copolymer, enthaltend aromatische (Meth)acrylat-Einheiten c1 und Methylmethacrylat-Einheiten c2, enthält,
wobei die Zusammensetzung > 1 Gew.-Teil (Meth)acrylat-Copolymer, also C, pro Gew.-Teil B enthält.

Gegenstand der Erfindung ist auch die Verwendung von (Meth)acrylat-Copolymer, enthaltend aromatische (Meth)acrylat-Einheiten c1 und aliphatische Methylmethacrylat-Einheiten c2, zur Reduktion der Trübung, bestimmt nach ASTM D 1003:2013, und/oder Verringerung der Opaleszenz, bestimmt nach visueller Beurteilung, von Polycarbonat/Polyalkyl(meth)acrylat-Blends, somit eine Verbesserung der Verträglichkeit der Komponenten Polycarbonat und Polyalkyl(meth)acrylat.

Die als bevorzugt für die erfindungsgemäße Zusammensetzung genannten Merkmale gelten selbstverständlich auch im Hinblick auf die erfindungsgemäße Verwendung.
Hier und an anderer Stelle bezeichnet der Begriff "(Meth)acrylat" Acrylate oder Methacrylate.

Die erfindungsgemäßen ternären Systeme zeichnen sich durch eine verbesserte Verträglichkeit im Vergleich zu binären Systemen, in denen nur Polycarbonat- und aliphatische Polyalkyl(meth)acrylatKomponenten vorliegen, aus, welche sich in den optischen Eigenschaften der ternären Systeme zeigt. So ist beispielsweise ist die Trübung von durch Spritzguss oder Extrusion hergestellten Formkörpern, Folien oder Platten verringert, und die Transmission für Licht im VIS-Bereich des Spektrums (380 bis 780 nm) erhöht.

Die Verwendung von Polymethylmethacrylaten in Polycarbonat-Zusammensetzungen ist bekannt. So beschreiben JP 2016129962 A, JP 2015206051 A und JP 2014111799 A jeweils binäre Zusammensetzungen, die neben Polycarbonat auch Polymethylmethacrylate enthalten. Es wird eine Verbesserung der Oberflächenhärte und eine reduzierte Doppelbrechung beschrieben.

Verbesserungen der Oberflächenhärte sind auch in JP 2015003978 A und JP 2015003979 A beschrieben. In JP 2014065901 A wird ein (Meth)acrylat-Copolymer, umfassend Methylmethacrylat-Einheiten und aromatische (Meth)acrylat-Einheiten, als Blendpartner für Polycarbonat beschrieben, welches zu einer Verbesserung der Oberflächenhärte führt und eine exzellente Transparenz der Zusammensetzung ergibt.

Weiterhin werden gute Oberflächenhärten und eine hohe Transparenz von Polycarbonat/Polymethacrylat-Zusammensetzungen in WO 2013/11804 A1, JP 2014001267 A, JP 2012251107 A und JP 2012036263 A beschrieben. Auch eine gute Kratzfestigkeit der Zusammensetzungen ist beschrieben.

In keinem dieser Dokumente wird jedoch ein ternäres System, enthaltend Polycarbonat und zwei verschiedene Acrylate, von denen eines ein Polyalkyl(meth)acrylat, und insbesondere ein Polymethyl(meth)acrylat (PMMA), ist, beschrieben.

Die einzelnen Bestandteile der erfindungsgemäßen Zusammensetzungen sind im Folgenden noch näher erläutert:

### Komponente A

Komponente A der erfindungsgemäßen Zusammensetzungen ist aromatisches Polycarbonat. Hierbei kann es sich um ein einzelnes aromatisches Polycarbonat als auch um eine Mischung verschiedener aromatischer Polycarbonate handeln.

Aromatische Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein.

Die Schmelzevolumenfließrate, MVR, des eingesetzten aromatischen Polycarbonats, bestimmt gemäß ISO 1133:2012-03 bei einer Prüftemperatur 300°C und 1,2 kg Belastung, beträgt bevorzugt ≥ 20 cm³/(10 min), weiter bevorzugt ≥ 22 cm³/(10 min) und besonders bevorzugt ≥ 28 cm³/(10 min) und ganz besonders bevorzugt ≥ 35 cm³/(10 min), äußerst bevorzugt ≥ 50 cm³/(10 min). Sofern die erfindungsgemäß verwendeten thermoplastischen Zusammensetzungen eine Mischung verschiedener aromatischer Polycarbonate enthalten, so sind etwaige Vorzugsbereiche als Angabe für die Gesamtmischung aromatischer Polycarbonate zu verstehen.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische DicarbonsäureesterGruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, S. 9-72 auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien. 1992, Seiten 117 bis 299 verwiesen.

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polyestercarbonate wird ein Teil der Kohlensäurederivate durch aromatische Dicarbonsäuren oder Derivate der Dicarbonsäuren ersetzt, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 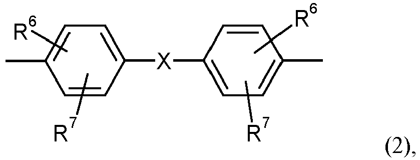 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (3)

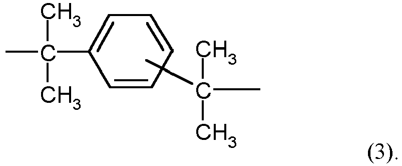

Beispiele für Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1' -Bis-(hydroxyphenyl)-diisopropylbenzole sowie deren kernalkylierte und kernhalogenierte Verbindungen.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie Dihydroxyarylverbindungen (I) bis (III) 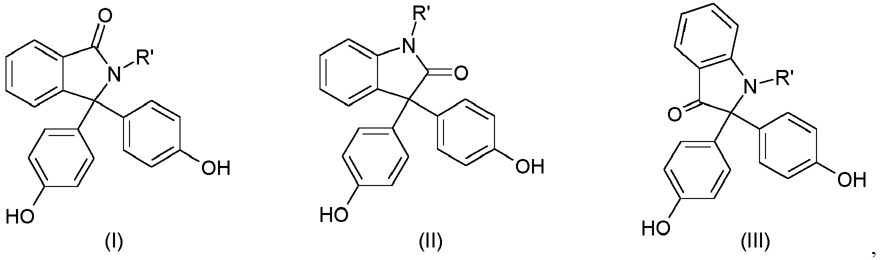 in denen R' jeweils für einen C₁- bis C₄-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (I), (II) und (III).

Diese und weitere geeignete Dihydroxyarylverbindungen sind z.B. in US 3 028 635 A, US 2 999 835 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden zwei oder mehr Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan, beziehungsweise der beiden Monomere Bisphenol A und 4,4'-Dihydroxydiphenyl, sowie von den Dihydroxyarylverbindungen der Formeln (I), (II) und/oder (III) 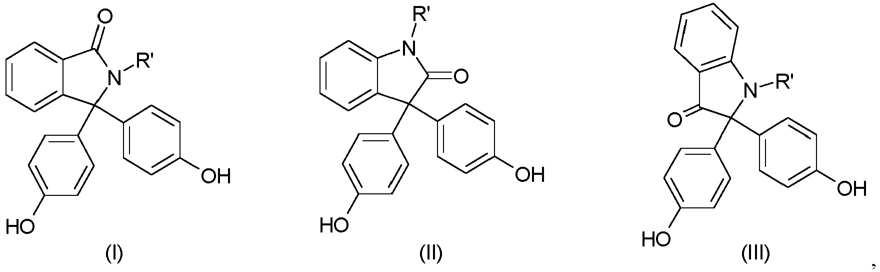 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A. Ganz besonders bevorzugt umfasst das aromatische Polycarbonat ein Bisphenol A-basiertes Homopolycarbonat. Äußerst bevorzugt ist das aromatische Polycarbonat Bisphenol A-basiertes Homopolycarbonat.

Der Gesamtanteil der Monomereinheiten beruhend auf den Formeln (I), (II), (III), 4,4'-Dihydroxydiphenyl und/oder Bisphenol TMC im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Dihydroxyarylverbindungen), sofern ein entsprechendes Copolycarbonat enthalten ist.

Die relative Lösungsviskosität der Copolycarbonate, bestimmt nach ISO 1628-4: 1999, liegt bevorzugt im Bereich von = 1,15 - 1,35.

Die verwendeten Dihydroxyarylverbindungen, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3 -phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Werden die verwendeten aromatischen Polycarbonate im Phasengrenzflächenverfahren hergestellt, erfolgt dies bevorzugt durch ein kontinuierliches Phasengrenzflächenkondensationsverfahren, weiter bevorzugt mit einem Hochviskos-Aufarbeitungsschritt, wie Ausdampfextruder oder Strangverdampfer zur Isolierung des Polycarbonats.

Die erfindungsgemäßen Zusammensetzungen basieren auf aromatischem Polycarbonat und enthalten daher mindestens 50 Gew.-%, bevorzugt mindestens 55 Gew.-%, weiter bevorzugt mindestens 60 Gew.-%, besonders bevorzugt mindestens 70 Gew.-%, aromatisches Polycarbonat. Bevorzugt umfasst das aromatische Polycarbonat Bisphenol A-basiertes Homopolycarbonat, besonders bevorzugt ist das aromatische Polycarbonat Bisphenol A-basiertes Homopolycarbonat.

### Komponente B

Komponente B ist ein Polyalkyl(meth)acrylat. Es versteht sich, dass es sich dabei um ein Polyalkyl(meth)acrylat oder um eine Mischung verschiedener Polyalkyl(meth)acrylate handeln kann. Unter "Polyalkyl(meth)acrylat" wird erfindungsgemäß ein unverzweigtes Polymer verstanden, welches ausschließlich über Alkylbausteine verfügt, somit keine aromatischen Gruppen enthält.

Das Polyalkyl(meth)acrylat gemäß Komponente B kann ein gewichtsmittleres Molekulargewicht von 50.000 bis 2.000.000 g/mol haben und weist vorzugsweise ein gewichtsmittleres Molekulargewicht von 80.000 bis 300.000 g/mol, weiter bevorzugt von 100.000 bis 200.000 g/mol, bestimmt mittels Gelpermeationschromatographie in Tetrahydrofuran unter PMMA-Kalibrierung, auf.

Das Polyalkyl(meth)acrylat weist bevorzugt
a) 52,0 bis 100,0 Gew-% Alkylmethacrylat-Wiederholungseinheiten mit 1 bis 20, bevorzugt 1 bis 12, weiter bevorzugt 1 bis 8, besonders bevorzugt 1 bis 4, Kohlenstoffatomen im Alkylrest auf, insbesondere Methylmethacrylat,
b) 0 bis 48,0 Gew.-% Alkylacrylat-Wiederholungseinheiten mit 1 bis 20, bevorzugt 1 bis 12, weiter bevorzugt 1 bis 8, besonders bevorzugt bis 4, Kohlenstoffatomen im Alkylrest, insbesondere Methylacrylat, und
keine aromatischen Einheiten auf.

Ganz besonders bevorzugt weist das Polyalkyl(meth)acrylat mindestens 60,0 Gew.-%, noch weiter bevorzugt mindestens 75,0 Gew.-%, insbesondere mindestens 85,0 Gew.-% Methylmethacrylat-Wiederholungseinheiten auf.

Äußerst bevorzugt umfasst das Polyalkyl(meth)acrylat 90,0 bis 99,0 Gew.-% Methylmethacrylat und 1,0 bis 10,0 Gew.-% Methylacrylat, jeweils bezogen auf das Gesamtgewicht des Polyalkyl(meth)acrylats.

Der Anteil von Komponente B in den erfindungsgemäßen Zusammensetzungen beträgt bevorzugt weniger als 20 Gew.-%, noch weiter bevorzugt 2 bis 15 Gew.-%, besonders bevorzugt ≤ 10 Gew.-%, ganz besonders bevorzugt 5 bis 10 Gew.-%, bezogen auf die Gesamtzusammensetzung.

### Komponente C

Komponente C ist (Meth)acrylat-Copolymer, enthaltend aromatische (Meth)acrylat-Einheiten c1 und außerdem aliphatische Methylmethacrylat-Einheiten c2. Sofern Komponente C nachfolgend charakterisiert ist, versteht es sich, dass sich die Angaben auf die gesamte Komponente C, also ggf. auf die Mischung aus verschiedenen entsprechenden Copolycarbonaten, bezieht.

Komponente C enthält die aromatischen (Meth)acrylat-Einheiten c1 und die Methylmethacrylat-Einheiten c2 in einem Gewichtsverhältnis (c1/c2) von (5 bis 80 Gew.-%)/(20 bis 95 Gew.-%), bevorzugt (10 bis 30 Gew.-%)/(70 bis 90 Gew.-%), wobei sich die Mengenangaben auf das Gesamtgewicht der Komponente C beziehen. Besonders bevorzugt enthält Komponente C keine anderen Einheiten.

Aromatische (Meth)acrylate sind solche (Meth)acrylate, die eine aromatische Gruppe in einem Teil des Esters tragen. Beispiele sind Phenyl(meth)acrylat sowie Benzyl(meth)acrylat und deren Mischungen. Komponente C umfasst bevorzugt Phenylmethacrylat und/oder Benzylmethacrylat, besonders bevorzugt Phenylmethacrylat.

Bevorzugt umfasst Komponente C ein Copolycarbonat aus Methylmethacrylat und Phenylmethacrylat, besonders bevorzugt ist Komponente C ein solches Copolycarbonat.

Das gewichtsmittlere Molekulargewicht der Komponente C beträgt vorzugsweise 5.000 bis 30.000 g/mol, weiter bevorzugt 10.000 bis 25.000 g/mol, bestimmt mittels Gelpermeationschromatographie in Tetrahydrofuran gegen Polystyrol-Standards.

Komponente C ist in den erfindungsgemäßen Zusammensetzungen in einer Menge von > 1 Gew.-Teil pro Gew.-Teil B enthalten, bevorzugt in einer Menge von > 1,5 Gew.-Teile C pro Gew.-Teil B, weiter bevorzugt in einer Menge ≥1,8 Gew.-Teile C pro Gew.-Teil B, besonders bevorzugt in einer Menge ≥ 1,9 Gew.-Teile C pro Gew.-Teil B.

### Komponente D

Die Polycarbonate der ternären Mischung können grundsätzlich ein oder mehrere übliche Additive für Polycarbonat in den üblichen Mengen enthalten, ohne dass der Effekt merklich beeinflusst würde.

Ein oder mehrere weitere übliche Additive sind bevorzugt in Mengen von 0 bis 30 Gew.-%, weiter bevorzugt bis zu 10,0 Gew.-%, noch weiter bevorzugt 0,01 Gew.-% bis 6,0 Gew.-%, besonders bevorzugt 0,1 Gew.-% bis 3,0 Gew.-%, ganz besonders bevorzugt 0,2 Gew.-% bis 1,0 Gew.-%, insbesondere bis 0,5 Gew.-% enthalten. Die Gruppe der weiteren Additive umfasst kein Polyalkyl(meth)acrylat, da dieses bereits als Komponente B beschrieben ist. Ebenso umfasst die Gruppe der weiteren Additive kein (Meth)acrylat-Copolymer, enthaltend aromatische (Meth)acrylat-Einheiten c1 und Methylmethacrylat-Einheiten c2 gemäß Komponente C. Weiterhin umfasst die Gruppe der weiteren Additive bevorzugt keine anorganischen Pigmente oder Füllstoffe.

Solche weiteren Additive, wie sie üblicherweise Polycarbonaten zugesetzt werden, sind insbesondere Thermostabilisatoren, Flammschutzmittel, Antioxidantien, Entformungsmittel, UV-Absorber, IR-Absorber, Antistatika, optische Aufheller, Umesterungsinhibitoren, Farbmittel und/oder Additive zur Lasermarkierung, insbesondere in den für Polycarbonat-basierte Zusammensetzungen üblichen Mengen. Derartige Additive sind beispielsweise in EP-A 0 839 623, WO-A 96/15102 oder in EP-A 0 500 496 beschrieben. Diese Additive können einzeln oder auch im Gemisch zugesetzt werden. Es versteht sich, dass nur solche Additive und nur in solchen Mengen zugesetzt werden dürfen, wenn sie sich nicht signifikant negativ auf den erfindungsgemäßen Effekt der transparenten Mischbarkeit von Polycarbonat und Poly(alkyl)methacrylat auswirken.

Bevorzugt sind die Additive ausgewählt aus der Gruppe der Thermostabilisatoren, Flammschutzmittel, Antioxidantien, Entformungsmittel, UV-Absorber, IR-Absorber, Antistatika, optischen Aufheller, Umesterungsinhibitoren, Farbmittel und/oder Additive zur Lasermarkierung. Noch weiter bevorzugt ist mindestens ein Thermostabilisator als weiteres Additiv enthalten.

Die weiteren Additive sind besonders bevorzugt solche aus der Gruppe, bestehend aus UV-Absorbern, Thermostabilisatoren, Antioxidantien, Antistatika, Entformungsmitteln, Umesterungsinhibitoren, Farbmitteln.

Geeignete Flammschutzmittel sind solche, ausgewählt aus der Gruppe der Alkali-, Erdalkali-, Ammoniumsalze von aliphatischen bzw. aromatischen Sulfonsäure-, Sulfonamid- und Sulfonimidderivaten, oder auch Kombinationen aus diesen. Die erfindungsgemäßen Zusammensetzungen enthalten bevorzugt kein PTFE, da sich dieses negativ auf die Transmission auswirkt.

Unter "Derivaten" werden erfindungsgemäß an dieser und anderer Stelle solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Besonders bevorzugt umfassen erfindungsgemäße Zusammensetzungen als Flammschutzmittel ein oder mehrere Verbindungen, ausgewählt aus der Gruppe, bestehend aus Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliumdiphenylsulfonsulfonat, Natrium- oder Kalium-2-formylbenzolsulfonat, Natrium- oder Kalium-(N-benzolsulfonyl)-benzolsulfonamid oder deren Mischungen.

Bevorzugt werden Natrium- oder Kaliumperfluorbutansulfat, Natrium- oder Kaliumperfluoroctansulfat, Natrium- oder Kaliumdiphenylsulfonsulfonat oder deren Mischungen eingesetzt. Ganz besonders bevorzugt ist Kaliumperfluor-1-butansulfonat, welches kommerziell erhältlich ist, unter anderem als Bayowet^{®} C4 von der Firma Lanxess, Leverkusen, Deutschland.

Weiterhin bevorzugt sind als Flammschutzmittel Phosphazene, insbesondere cyclische Phosphazene, Polyphosphazene und deren Derivate sowie deren Mischungen, beispielsweise Rabitle FP110 (Fushimi Pharmaceutical Co. Ltd), besonders bevorzugt ist das Flammschutzmittel ein Phosphazen oder eine Mischung von Phosphazenen.

Die Mengen von Alkali-, Erdalkali- und/oder Ammoniumsalzen von aliphatischen bzw. aromatischen Sulfonsäure-, Sulfonamid- und Sulfonimidderivaten in der thermoplastische Zusammensetzung, sofern diese eingesetzt werden, betragen bevorzugt insgesamt 0,05 Gew.-% bis 0,5 Gew.-%, weiter bevorzugt 0,06 Gew.-% bis 0,3 Gew.-%, besonders bevorzugt 0,06 Gew.-% bis 0,2 Gew.-%, ganz besonders bevorzugt 0,065 Gew.-% bis 0,12 Gew.-%, äußerst bevorzugt 0,065 Gew.-% bis 0,9 Gew.-%.

Zusätzlich oder alternativ enthaltene, bevorzugte Additive sind Thermostabilisatoren. Als Thermostabilisatoren sind insbesondere Phosphor-basierte Stabilisatoren, ausgewählt aus der Gruppe der Phosphate, Phosphite, Phosphonite, Phosphine und deren Mischungen, geeignet. Es können auch Mischungen von verschiedenen Verbindungen aus einer dieser Untergruppen eingesetzt werden, z.B. zwei Phosphite. Als Thermostabilisatoren werden bevorzugt Phosphor-Verbindungen mit der Oxidationszahl +III, insbesondere Phosphine und/oder Phosphite, eingesetzt. Als Thermostabilisatoren eignen sich besonders bevorzugt Triphenylphosphin, Tris-(2,4-di-tert-butylphenyl)phosphit (Irgafos 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox 1076), Bis-(2,4-dicumylphenyl)-pentaerythritoldiphosphit (Doverphos S-9228), Bis-(2,6-di-tert-butyl-4-methylphenyl)-pentaerythritoldiphosphit (ADK STAB PEP-36). Sie werden allein oder im Gemisch, z. B. Irganox B900 (Gemisch aus Irgafos168 und Irganox 1076 im Verhältnis 4:1) oder Doverphos S-9228 mit Irganox B900 bzw. Irganox 1076, eingesetzt.

Die Thermostabilisatoren werden bevorzugt in Mengen bis zu 1,0 Gew.-%, weiter bevorzugt 0,003 Gew.-% bis 1,0 Gew.-%, noch weiter bevorzugt 0,005 Gew.-% bis 0,5 Gew.-%, besonders bevorzugt 0,01 Gew.-% bis 0,2 Gew.-%, eingesetzt.

Bevorzugte Additive sind auch spezielle UV-Stabilisatoren, die eine möglichst geringe Transmission unterhalb 400 nm und eine möglichst hohe Transmission oberhalb von 400 nm besitzen. Für den Einsatz in den erfindungsgemäßen Zusammensetzungen besonders geeignete Ultraviolett-Absorber sind Benzotriazole, Triazine, Benzophenone und/oder arylierte Cyanoacrylate. Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin 234, BASF SE, Ludwigshafen), 2-(2'-Hydroxy-5'-(tert.-octyl)-phenyl)-benzotriazol (Tinuvin 329, BASF SE, Ludwigshafen), Bis-(3-(2H-benztriazolyl)-2-hydroxy-5-tert.-octyl)methan (Tinuvin 360, BASF SE, Ludwigshafen), 2-(4,6-Diphenyl-1,3,5-triazin-2-yl)-5-(hexyloxy)-phenol (Tinuvin^{®} 1577, BASF SE, Ludwigshafen), 2-(5chloro-2H-benzotriazol-2-yl)-6-(1,1-dimethylethyl)-4-methyl-phenol (Tinuvin 326, BASF SE, Ludwigshafen), sowie Benzophenone wie 2,4-Dihydroxybenzophenon (Chimasorb 22 , BASF SE, Ludwigshafen) und 2-Hydroxy-4-(octyloxy)-benzophenon (Chimassorb 81, BASF SE, Ludwigshafen), 2,2-Bis[[(2-cyano-1-oxo-3,3-diphenyl-2-propenyl)oxy]-methyl]-1,3-propandiylester (9CI) (Uvinul 3030, BASF SE, Ludwigshafen), 2-[2-Hydroxy-4-(2-ethylhexyl)oxy]phenyl-4,6-di(4-phenyl)phenyl-1,3,5-triazine (Tinuvin 1600, BASF SE, Ludwigshafen), Tetraethyl-2,2'-(1,4-phenylen-dimethyliden)-bismalonat (Hostavin B-Cap, Clariant AG) oder N-(2-Ethoxyphenyl)-N'-(2-ethylphenyl)-ethandiamid (Tinuvin 312, CAS-Nr. 23949-66-8, BASF SE, Ludwigshafen). Besonders bevorzugte spezielle UV-Stabilisatoren sind Tinuvin 360, Tinuvin 329, Tinuvin 326, Tinuvin 1600, Tinuvin 312, Uvinul 3030 und/oder Hostavin B-Cap, ganz besonders bevorzugt sind Tinuvin 329 und Tinuvin 360. Es können auch Mischungen der genannten Ultraviolett-Absorber eingesetzt werden.

Sofern UV-Absorber enthalten sind, enthält die Zusammensetzung bevorzugt Ultraviolett-Absorber in einer Menge bis 0,8 Gew.-%, bevorzugt 0,05 Gew.-% bis 0,5 Gew.-%, weiter bevorzugt 0,08 Gew.-% bis 0,4 Gew.-%, ganz besonders bevorzugt 0,1 Gew.-% bis 0,35 Gew.-%, bezogen auf die Gesamtzusammensetzung.

Die Zusammensetzungen können auch Phosphate oder Sulfonsäureester als Umesterungsinhibitoren enthalten. Bevorzugt ist Triisooctylphosphat als Umesterungsinhibitor enthalten. Triisooctylphosphat wird bevorzugt in Mengen von 0,003 Gew.-% bis 0,05 Gew.-%, weiter bevorzugt 0,005 Gew.-% bis 0,04 Gew.-% und besonders bevorzugt von 0,01 Gew.-% bis 0,03 Gew.-%, bezogen auf die Gesamtzusammensetzung, eingesetzt.

Erfindungsgemäß bevorzugte Zusammensetzungen enthalten
A) mindestens 50 Gew.-% aromatisches Polycarbonat mit einer Schmelzevolumenfließrate MVR > 19 cm³/(10 min), bestimmt gemäß ISO 1133:2012-03, bei einer Prüftemperatur von 300°C und 1,2 kg Belastung,
B) Polyalkyl(meth)acrylat,
   dadurch gekennzeichnet, dass
   die Zusammensetzung
C) (Meth)acrylat-Copolymer, enthaltend aromatische (Meth)acrylat-Einheiten c1 und Methylmethacrylat-Einheiten c2, enthält,
wobei die Zusammensetzung > 1 Gew.-Teil (Meth)acrylat-Copolymer pro Gew.-Teil B enthält.

Erfindungsgemäß weiter bevorzugte Zusammensetzungen bestehen aus
A) mindestens 55 Gew.-% aromatischem Polycarbonat mit einer Schmelzevolumenfließrate MVR > 19 cm³/(10 min), bestimmt gemäß ISO 1133:2012-03 bei einer Prüftemperatur von 300°C und 1,2 kg Belastung,
B) 2 bis 20 Gew.-% Polyalkyl(meth)acrylat,
   dadurch gekennzeichnet, dass
   die Zusammensetzung
C) (Meth)acrylat-Copolymer, enthaltend aromatische (Meth)acrylat-Einheiten c1 und Methylmethacrylat-Einheiten c2, enthält,
   wobei die Zusammensetzung > 1 Gew.-Teil (Meth)acrylat-Copolymer pro Gew.-Teil B enthält,
D) optional einem oder mehreren weiteren Additiven, ausgewählt aus der Gruppe, bestehend aus Thermostabilisatoren, Flammschutzmitteln, Antioxidantien, Entformungsmitteln, UV-Absorbern, IR-Absorbern, Antistatika, optischen Aufhellern, Umesterungsinhibitoren, Farbmitteln und/oder Additiven zur Lasermarkierung, wobei noch weiter bevorzugt mindestens ein Thermostabilisator als weiteres Additiv enthalten ist.

Besonders bevorzugte Zusammensetzungen bestehen aus
A) mindestens 70 Gew.-% aromatischem Polycarbonat mit einer Schmelzevolumenfließrate MVR > 19 cm³/(10 min), bestimmt gemäß ISO 1133:2012-03 bei einer Prüftemperatur von 300°C und 1,2 kg Belastung, wobei das aromatische Polycarbonat bevorzugt Bisphenol A-basiertes Homopolycarbonat ist,
B) 5 bis 10 Gew.-% Polyalkyl(meth)acrylat,
   dadurch gekennzeichnet, dass
   die Zusammensetzung
C) (Meth)acrylat-Copolymer, enthaltend aromatische (Meth)acrylat-Einheiten c1 und Methylmethacrylat-Einheiten c2, enthält,
   wobei die Zusammensetzung > 1,5 Gew.-Teil (Meth)acrylat-Copolymer pro Gew.-Teil B enthält, weiter bevorzugt ≥1,8 Gew.-Teile (Meth)acrylat-Copolymer pro Gew.-Teil B,
D) optional einem oder mehreren weiteren Additiven, ausgewählt aus der Gruppe, bestehend aus Thermostabilisatoren, Flammschutzmitteln, Antioxidantien, Entformungsmitteln, UV-Absorbern, IR-Absorbern, Antistatika, optischen Aufhellern, Umesterungsinhibitoren, Farbmitteln und/oder Additiven zur Lasermarkierung.

Die Herstellung der erfindungsgemäßen Zusammensetzungen, enthaltend die Komponenten A bis C sowie ggf. D erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B, C und ggf. D, mit dem Polycarbonat oder auch mit dem ggf. vorhandenen Blendpartner, verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten der erfindungsgemäßen Zusammensetzung durch bekannte Verfahren oder als Masterbatch in die Polycarbonat/Polyalkyl(meth)acrylat-Mischung eingebracht werden.

Die Verwendung von Masterbatchen, in aromatischem Polycarbonat und/oder in Polyalkyl(meth)acrylat, ist zum Einbringen der Komponenten C und/oder D, einzeln oder in Mischung, bevorzugt. Die Komponente C kann also in Form von Masterbatchen sowohl in Komponente A als auch in Komponente B eingearbeitet sein.

Besonders bevorzugt wird die Komponente C sowohl als Masterbatch in aromatischem Polycarbonat als auch als Masterbatch in Polyalkyl(meth)acrylat in die erfindungsgemäße Zusammensetzung eingebracht.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die entsprechend erhaltenen Zusammensetzungen werden vorzugsweise zur Herstellung von Formteilen verwendet.

Die Herstellung der Formteile erfolgt vorzugsweise durch Spritzguss, Extrusion oder aus Lösung in einem Gießprozess. Die erfindungsgemäßen Zusammensetzungen können auf üblichen Maschinen, beispielsweise auf Extrudern oder Spritzgussmaschinen, zu beliebigen Formkörpern, wie beispielsweise Folien, Platten oder Flaschen, in üblicher Weise verarbeitet werden.

Die Witterungsstabilität durch den Polyalkyl(meth)acrylat-Anteil ist besonders, aber nicht ausschließlich, vorteilhaft bei Außenanwendungen. So sind die erfindungsgemäßen Zusammensetzungen zur Herstellung von Bauteilen für Swimmingpoolabdeckungen, Stadiondächer, für Polycarbonatplatten im Bauwesen, etwa für Gewächshäuser und Terrassenüberdachungen, Beleuchtungseinheiten, z.B. für Straßenlampengehäuse, für Schalterschränke und Gehäuse für elektrische Anlagen und Bauteile, Batterieladestationen, Automobilaußenteile wie Streuscheiben oder Blinkerabdeckungen, besonders geeignet, also für Formteile, die Teil obiger Anwendungen sind, und welche vorzugsweise dazu bestimmt sind, in ihrer Anwendung der Witterung ausgesetzt zu sein.

Entsprechende Formteile sind auch Filamente für den 3D-Druck. Weitere Anwendungen sind Essgeschirre, Schüsseln, Becher, Gläser, Tassen, Wasserflaschen, Automobilinnenteile wie Schalter, Displayfolien und -abdeckungen, Medizinanwendungen wie z. B. Dialysatorgehäuse oder Mehrwegehähne.

Diese und sonstige Formteile, bestehend aus den erfindungsgemäßen Zusammensetzungen oder umfassend - z.B. bei Mehrkomponentenspritzguss - diese, einschließlich der Formteile, die eine Schicht eines Mehrschichtsystems bzw. ein Element eines oben genannten Bauteils darstellen oder ein solches Bauteil sind, aus ("bestehend aus") diesen erfindungsgemäßen Zusammensetzungen, sind ebenfalls Gegenstand dieser Anmeldung.

Die erfindungsgemäßen Zusammensetzungen sind nicht nur in Form von Filamenten, sondern auch als Granulat oder Pulver als Material im 3D-Druck einsetzbar.

Die nachfolgenden Beispiele sollen die Erfindung illustrieren, ohne sie jedoch einzuschränken.

### Beispiele

### 1. Beschreibung der Rohstoffe und Prüfmethoden

Die in den folgenden Beispielen beschriebenen Polycarbonat-basierten Zusammensetzungen sowie die verschiedenen Masterbatche wurden auf entweder auf einem Extruder ZE 25 der Fa. Berstorff mit einem Durchsatz von 10 kg/h durch Compoundierung oder einem DSM Miniextruder bei 280 Grad Massetemperatur und 5 Minuten Verweilzeit hergestellt. Dabei wurden Masterbatche des (Meth)acrylat-Copolymers in aromatischen Polycarbonat und/oder in PMMA verwendet. Die Schmelzetemperatur betrug etwa 275 °C.

### a) Rohstoffe

- **A-1:**: Lineares Polycarbonat auf Basis von Bisphenol A, hergestellt nach dem Grenzflächenverfahren, *tert*-Butylphenol-terminiert, mit einer Schmelze-Volumenfließrate MVR von > 50 cm³/(10 min) gemäß ISO 1133:2012-03 bei einer Prüftemperatur von 300°C und 1,2 kg Belastung. Enthält ca. 250 ppm Thermostabilisator.
- **A-2:**: Lineares Polycarbonat auf Basis von Bisphenol A, hergestellt nach dem Grenzflächenverfahren, *tert*-Butylphenol-terminiert, mit einer Schmelze-Volumenfließrate MVR von 19 cm³/(10 min) (gemäß ISO 1133:2012-03, bei einer Prüftemperatur von 300°C und 1,2 kg Belastung).
- **B-1:**: Polymethylmethacrylat PMMA 7N, der Firma Röhm GmbH mit einem MVR 6 cm³/(10 min) (gemäß ISO 1133:2012-03, bei einer Prüftemperatur von 230°C und 3,8 kg Belastung).
- **C-1:**: Metablen H-880 der Firma Mitsubushi Chemical Corp., Tokyo. Copolymer aus Methylmethacrylat (79,5 Gew.-%) und Phenylmethacrylat (20,5 Gew.-%). M_{w} = ca. 14.000 g/mol, bestimmt mittels Gelpermeationschromatographie in Tetrahydrofuran gegen Polystyrol-Standards.

Zur verbesserten Verarbeitung der verschiedenen Komponenten wurden vorher Masterbatche hergestellt. Die nachfolgende Übersicht zeigt die Zusammensetzungen der verschiedenen Masterbatche:
- MB-1:: Mischung bestehend aus 90 Gew.-% A-1 und 10 Gew.-% C-1
- MB-2:: Mischung bestehend aus 80 Gew.-% A-1 und 20 Gew.-% C-1
- MB-3:: Mischung bestehend aus 90 Gew.-% A-2 und 10 Gew.-% C-1
- MB-4:: Mischung bestehend aus 80 Gew.-% A-2 und 20 Gew.-% C-1
- MB-5:: Mischung bestehend aus 95 Gew.-% B-1 und 5 Gew.-% C-1

Bei den Masterbatchen handelte es sich um klar transparente Compounds.

Diese Masterbatche wurden zur Herstellung der Mischungen aus Tabelle 3 eingesetzt, und zwar in den aus Tabelle 1 ersichtlichen Mengen.

**Tabelle 1: Eingesetzte Mengen der Masterbatche**

| | **4E** | **5E** | **6V** | **7V** | **8V** | **9E** | **10V** | **11E** |
|---|---|---|---|---|---|---|---|---|
| | [Gew.-%] | [Gew.-%] | [Gew.-%] | [Gew.-%] | [Gew.-%] | [Gew.-%] | [Gew.-%] | [Gew.-%] |
| **MB-1** | 95,0 | | | | 90 | | 90 | |
| **MB-2** | | 95,0 | | | | 90 | | 90 |
| **MB-3** | | | 95,0 | | | | | |
| **MB-4** | | | | 95,0 | | | | |
| **MB-5** | | | | | | | 10,0 | 10,0 |
| **B-1** | 5,0 | 5,0 | 5,0 | 5,0 | 10,0 | 10,0 | | |

### b) Prüfmethoden

Die Musterplatten wurden jeweils durch Spritzguss hergestellt.

Eine Verringerung der durch visuelle Beurteilung ermittelten Opaleszenz - und damit verbunden eine Zunahme der Transparenz und Verringerung der Trübung- sind Indikatoren für eine Verbesserung der Verträglichkeit der Komponenten A und B.

Zur Differenzierung zwischen den verschiedenen Compounds werden Qualitäts-Klassen (QK) verwendet, die nachfolgend in Tabelle 2 definiert sind. Zur Bewertung der QK-Klassen wurden auf einer DSM Minispritzgussmaschine Plättchen in einer Dicke von 1,5 mm hergestellt.

**Tabelle 2: Qualitätsklassen der Compounds bei visueller Abmusterung**

| | |
|---|---|
| QK-1 | opake Compounds, praktisch keine Transmission, sehr starke Trübung |
| QK-2 | starke Opaleszenz, geringe Transmission, starke Trübung |
| QK-3 | mittlere Opaleszenz, mittlere Transmission, störende Trübung |
| QK-4 | geringe Opaleszenz, hohe Transmission, geringe Trübung |
| QK-5 | sehr geringe Opaleszenz, sehr hohe Transmission, keine mit dem Auge wahrnehmbare Trübung |

Vergleichsversuche sind in den nachfolgenden Tabellen mit "V" gekennzeichnet, erfindungsgemäße Versuche mit "E".

**Tabelle 2: Compounds und Qualitätsklassen der aus den Compounds hergestellten Prüfkörper bei der visuellen Abmusterung**

| | **1V** | **2V** | **3V** | **4E** | **5E** | **6V** | **7V** | **8V** | **9E** | **10V** | **11E** |
|---|---|---|---|---|---|---|---|---|---|---|---|
| | [Gew.-%] | [Gew.-%] | [Gew.-%] | [Gew.-%] | [Gew.-%] | [Gew.-%] | [Gew.-%] | [Gew.-%] | [Gew.-%] | [Gew.-%] | [Gew.-%] |
| **A-1** | | | 95 | 85,5 | 76 | | | 81 | 72 | 81 | 72 |
| **A-2** | 95 | 5 | | | | 85,5 | 76 | | | | |
| **B** | 5 | 95 | 5 | 5 | 5 | 5 | 5 | 10 | 10 | 9,5 | 9,5 |
| **C** | | | | 9,5 | 19 | 9,5 | 19 | 9 | 18 | 9,5 | 18,5 |
| | | | | | | | | | | | |
| **QK-** | 2 | 1 | 3 | 4 | 5 | 2 | 3 | 2 | 4 | 3 | 5 |

Die Vergleichsbeispiele 1V, 2V und 3V zeigen, dass Zusammensetzungen aus Polycarbonat und der Komponente B, Polyalkyl(methyl)acrylat, hier PMMA, nicht ohne Weiteres ohne störende Trübung miteinander mischbar sind. Entsprechende Zusammensetzungen zeigen Opaleszenz und eine starke Trübung.

Wie aus den erfindungsgemäßen Beispielen 4E, 5E, 9E und 11E erkennbar, kann jedoch die Transmission durch den Zusatz der Komponente C, (Meth)acrylat-Copolymer, enthaltend aromatische (Meth)acrylat-Einheiten und aliphatische Methylmethacrylat-Einheiten, signifikant verbessert und die Opaleszenz deutlich reduziert werden. Dafür sind aber gewisse Mindestmengen an Komponente C im Verhältnis zu dem PMMA erforderlich. Ein Gewichtsteil der Komponente C, bezogen auf einen Gewichtsteil PMMA, ist nicht ausreichend (Beispiele 8V, 10V), während bei einem Gewichtsverhältnis von 1,8 zu 1 (Komponente C zu Komponente B, 9E) bereits eine deutliche Verbesserung der optischen Eigenschaften erzielt wird.

Wie aus den erfindungsgemäßen Beispielen 4E und 5E im Vergleich zu den Vergleichsbeispielen 6V und 7V erkennbar, lassen sich mit Polycarbonatkomponenten, die geringere Molekulargewicht aufweisen, bessere Ergebnisse erzielen.

Ferner werden bessere Qualitätsklassen erzielt, sofern Komponente C als Masterbatch beider zu vermischender Polymere, Polycarbonat und PMMA, eingebracht wird (Versuche 10V, 11E im Vergleich zu Versuchen 8V, 9E).

## Patentansprüche

1. Thermoplastische Zusammensetzung, enthaltend
A) aromatisches Polycarbonat mit einer Schmelzevolumenfließrate MVR > 19 cm³/(10 min), bestimmt gemäß ISO 1133:2012-03 bei einer Prüftemperatur von 300°C und 1,2 kg Belastung,
B) Polyalkyl(meth)acrylat,
**dadurch gekennzeichnet, dass**
die Zusammensetzung
C) (Meth)acrylat-Copolymer, enthaltend aromatische (Meth)acrylat-Einheiten c1 und Methylmethacrylat-Einheiten c2, enthält,
wobei die Zusammensetzung > 1 Gew.-Teil (Meth)acrylat-Copolymer pro Gew.-Teil B enthält.

2. Thermoplastische Zusammensetzung nach Anspruch 1, wobei die Zusammensetzung ≥ 1,5 Gew.-Teile C pro Gew.-Teil B enthält.

3. Thermoplastische Zusammensetzung nach Anspruch 1 oder 2, wobei die Zusammensetzung ≥ 1,8 Gew.-Teile, bevorzugt ≥ 1,9 Gew.-Teile C pro Gew.-Teil B enthält.

4. Thermoplastische Zusammensetzung nach einem der vorhergehenden Ansprüche, wobei die Zusammensetzung mindestens 60 Gew.-% aromatisches Polycarbonat und 2 bis 15 Gew.-% an Komponente B, jeweils bezogen auf die Gesamtzusammensetzung, enthält.

5. Thermoplastische Zusammensetzung nach einem der vorhergehenden Ansprüche, wobei Komponente C aromatische (Meth)acrylat-Einheiten c1 und Methylmethacrylat-Einheiten c2 in einem Gewichtsverhältnis (c1/c2) von (5 bis 80 Gew.-%)/(20 bis 95 Gew.-%), wobei sich die Angaben auf das Gesamtgewicht an Komponente C beziehen, aufweist.

6. Thermoplastische Zusammensetzung nach einem der vorgehenden Ansprüche, wobei Komponente B keine aromatischen Anteile aufweist.

7. Thermoplastische Zusammensetzung nach einem der vorhergehenden Ansprüche, wobei die Schmelzevolumenfließrate MVR des aromatischen Polycarbonats ≥ 20 cm³/(10 min), bestimmt gemäß ISO 1133:2012-03 bei einer Prüftemperatur von 300°C und 1,2 kg Belastung, beträgt.

8. Thermoplastische Zusammensetzung nach einem der vorhergehenden Ansprüche, wobei die Schmelzevolumenfließrate MVR des aromatischen Polycarbonats ≥ 35 cm³/(10 min), bestimmt gemäß ISO 1133:2012-03 bei einer Prüftemperatur von 300°C und 1,2 kg Belastung, beträgt.

9. Thermoplastische Zusammensetzung nach einem der vorhergehenden Ansprüche, bestehend aus den Komponenten A, B und C und optional einem oder mehreren Additiven, ausgewählt aus der Gruppe, bestehend aus Thermostabilisatoren, Flammschutzmitteln, Antioxidantien, Entformungsmitteln, UV-Absorbern, IR-Absorbern, Antistatika, optischen Aufhellern, Umesterungsinhibitoren, Farbmitteln und/oder Additiven zur Lasermarkierung

10. Formteil aus einer thermoplastischen Zusammensetzung nach einem der vorhergehenden Ansprüche.

11. Formteil nach Anspruch 10, wobei das Formteil Teil einer Swimmingpoolabdeckung, eines Stadiondaches, einer Beleuchtungseinheit, eines Schalterschrankes, eines Gehäuses für elektrische Anlagen oder Bauteile, einer Batterieladestation, eines Automobilaußenteils, eines Automobilinnenteils, eines Essgeschirrstücks, eines Medicalproduktes oder ein Filament für den 3D-Druck oder eine Polycarbonatplatte im Bauwesen ist.

12. Verfahren zur Herstellung der thermoplastischen Zusammensetzung nach einem der Ansprüche 1 bis 9, umfassend die folgenden Schritte:
(i) Mischen der Komponenten A bis C und ggf. D in einem oder mehreren Schritten,
(ii) Schmelzecompoundierung der in Schritt (i) erhaltenen Mischung, ggf. in Anwesenheit weiterer Komponenten, wobei die Komponente C vorzugsweise als Masterbatch in der Komponente A und/oder in der Komponente B eingebracht ist.

13. Verfahren nach Anspruch 12, wobei Komponente C als Masterbatch in aromatischem Polycarbonat in die Zusammensetzung eingebracht wird.

14. Verfahren nach Anspruch 12, wobei Komponente C als Masterbatch in Komponente A und als Masterbatch in Komponente B in die Zusammensetzung eingebracht wird.

15. Verwendung von (Meth)acrylat-Copolymer, enthaltend aromatische (Meth)acrylat-Einheiten c1 und aliphatische Methylmethacrylat-Einheiten c2, zur Reduktion der Trübung, bestimmt nach ASTM D1003:2013, und/oder Erhöhung der Transmission im VIS-Bereich des Spektrums (380 bis 780 nm), bestimmt nach DIN ISO 13468-2:2006 (D65, 10°, Schichtdicke der Musterplatte 4 mm), von Polycarbonat/Polyalkyl(meth)acrylat- Blends im Vergleich zu entsprechenden Zusammensetzungen, die das (Meth)acrylat-Copolymer nicht enthalten.
